# EUROPEAN PATENT SPECIFICATION

(11) **EP 4 314 097 B1**
(45) Date of publication and mention of the grant of the patent: **23.04.2025**
(21) Application number: 22719883.5
(22) Date of filing: 31.03.2022
(51) Int. Cl.: C08F 220/18, C09D 133/02, C09D 7/43, D21H 19/56, C09D 5/02

(54) **ASSOCIATIVE THICKENERS**
ASSOZIATIVE VERDICKUNGSMITTEL
ÉPAISSISSANTS ASSOCIATIFS

(30) Priority: 02.04.2021 IT 202100008414
(43) Date of publication of application: 07.02.2024
(73) Proprietor: Lamberti SPA, 21041 Albizzate (VA) (IT)
(72) Inventor: LUGATO, Tommaso, 21020 Brebbia (VA) (IT); GIUDICI, Max, 22074 Lomazzo (CO) (IT); COGET, Karine, 21019 Somma Lombardo (VA) (IT); GIALLOMBARDO, Daniele, 21013 Gallarate (VA) (IT); MICHIELIN, Stefano, 21050 CAIRATE (VA) (IT)
(74) Representative: Giaroni, Paola
(86) International application number: PCT/EP2022/058533
(87) International publication number: WO 2022/207776

(56) References cited:
- WO-A1-2009/090204
- WO-A1-2013/068375
- WO-A1-2018/206195
- US-A1- 2014 316 043

## Description

### Technical field

The present disclosure relates to associative polymeric thickeners that are especially useful in aqueous pigmented suspensions, such as paper coating compositions and water-based paints, where they manifest high thickening capability, versatility and optimum rheological profile. It also relates to aqueous inorganic pigment suspensions containing these associative polymeric thickeners, which are useful for the coating of paper and cardboard (from here ahead both indicated with the term "paper"), and as water-based paints

### Background art

It is well known that the surface of printing paper sheets is commonly coated with a coating (paper slip) that makes it smooth and glossy.

Paper coating, thanks to the resulting improved interaction of the coating with printing inks, also gives the surface good characteristics of printability.

Paper coating compositions, commonly also called coating colours or coating slips, generally comprise high load of fillers or pigments dispersed in water (such as kaolin, ground or precipitated calcium carbonate, chalk, titanium dioxide, and mixture thereof), polymeric binders (typically film forming acrylic resins, styrene butadiene latexes, starch, modified starches, mixtures thereof), and functional additives, such as dispersing agents, water retention agents, rheology modifiers, lubricants, antifoam agents and biocides. Binders are responsible for the cohesion of the final coating and for its adhesion to the paper sheet. Dispersing agents reduce the interactions between the particles of the inorganic filler to make it possible to build up high solid contents. Water retention agents prevent dewatering of the coating composition upon contact with the surface of the paper sheet.

Not less importantly, rheology modifiers (or here, simply, "thickeners") are indispensable to regulate the viscosity of the paper coating compositions and to modulate their rheology.

They shall ensure, for example, that, at low shear rate, the coating composition has a high enough viscosity to maintain a homogeneous suspension and to prevent excessive absorption into the paper. At higher shear rate (typically that of application) the viscosity will have to be low enough to ensure that an even coating of the composition can be applied over the entire surface of the paper. Higher coating speeds also require lower high shear viscosity.

The formulation of water-based paints also needs a strict control of their rheology.

Like paper coating compositions, water-based paints ordinarily comprise organic polymeric binders, pigments, and various additives.

Water-based paints require effectiveness in a number of rheological properties to permit proper utilization thereof. For instance, the paint shall exhibit a suitable flow out of the storage receptacle as well as adhesion to a brush. Upon application to a surface, the paint shall flow and level within the brush stroke or paint roller tracks left on the surface to create a uniform coating without streaks therein; proper rheology and quick drying times prevent any gravitational pull to cause to run down the target substrate or sag after application. Additionally, paints should show a uniform coloration over the target surface, both in terms of the pigments applied, as well as overall coating. Lastly, it is also preferable that water-borne paints exhibit a propensity for stability when stored after initial preparation on-site or at a place of purchase/production. In fact, phase separation of the paint is highly undesirable as non-uniformity in final applied colorations would most likely result if a phase separation has occurred.

The paint viscosity during storage must be adequately high to prevent settling, but readily reduced by applied shear to spread and flow evenly. Water-based paint should exhibits pseudoplastic behaviour to enable the paint to be applied readily by brush or roller or spray application, although they may also comprise Newtonian thickeners to control the viscosity all over the shear range.

The thickeners for water-based paints can be natural, synthetic or semi-synthetic polymers.

Among the thickeners of choice for water-based paints associative polymers, of natural and synthetic origin, have been used, to produce very good flow, levelling, and anti-spattering properties on application.

Overall, in the specialised literature and on the market, many products are reported to efficiently regulate the rheology of aqueous pigmented compositions, such as the paper coating compositions and the water-based paints, often based on the use of acrylic anionic polymers performing as thickeners at neutral and basic pHs (alkali swellable or hydrophobically modified, associative alkali swellable acrylics, respectively ASE and HASE).

Associative acrylic thickeners, or HASEs, are characterised by small portions of monomers units containing hydrophobic side groups, typically C₈-C₃₀ alkyl groups, joined to the polymer backbone by means of hydrophilic spacers, most often polyoxyethylene chains. The pendant groups of the HASEs are capable of interaction with similar groups in the polymer or with other ingredients of the compositions in which the polymer is present and can form non-specific "associations", generally based on hydrophobic interactions that usually enhance the viscosity of the compositions.

According to 2004/076743 (CIBA), it is well known that associative thickeners bring about low high shear viscosity at small dosages and they could also give an economic advantage over non-hydrophobic alkali swellable acrylic polymers.

Nonetheless, some limitations to their comprehensive use do exist.

The positive economic balance might be overturned by the cost of the associative monomer.

Another fact that should be considered is that the rheology of the compositions thickened by associative acrylics is more subject to the influence of the chemical nature of all the ingredients, especially of the binder constituents, mainly from their ionicity, hydrophilicity/hydrophobicity. Consequently, many associative acrylic thickeners suffer from poor versatility, performing much differently in aqueous pigmented compositions that are apparently similarly constituted.

This is particularly true for paper coating compositions.

In the latter, it has also been reported that associative thickeners may reduce the water retention of the composition.

Among the patents that propose associative thickeners for paper coating compositions trying to solve the above drawbacks we mention:
- the above cited WO 2004/076743 (CIBA), providing a composition for modifying the rheology of paper coatings comprising an associative thickener characterised in that the associative content of the thickener is below 10%, the molecular weight of the thickener is below about 1 million daltons, and the acid content is at least 10% by weight.
- EP 2531536 (BASF), related to associative polyacrylic thickeners post-reacted with initiators forming nonionic radicals.
- EP 2776518 (BASF), that describes HASE for paper slips having a relatively low weight average molecular weight and prepared in the presence of a specific chain transfer agent, tert-dodecyl mercaptan.

In the field of water-based paints, we mention EP 3622028 (BASF), according to which HASE copolymer having a monomer with the hydrophobe derived from C₁₀-C₁₅ branched alcohols with a mean degree of branching (iso-index) in the range from 1.5- 3.5 exhibits high thickening efficiency at high shear rates and a Newtonian (shear independent) rheology profile in various coating formulations.

Some synthetic thickeners, originally designed for use in other industrial fields, such as cosmetics, oilfield, ceramic, textiles and detergence, are also said to be utilizable in water-based paints and paper coatings.

As an example, EP1778797 (COATEX), concerns the use as a thickening agent, in possibly pigmented aqueous formulations, of a water-soluble acrylic copolymer (HASE) consisting of specific monomers, one of which is characterised by a non-aromatic mono-branched chain having 12 to 24 carbon atoms and 2 branches each having at least 6 carbon atoms. Considering all the above, it can be concluded that the advantage of associative synthetic thickeners as rheology modifiers for aqueous pigmented compositions is obtained in certain specific cases, where the level of associative monomer may remain low in the polymer, where association is not excessively perturbed by the chemical environment, and where the water retention is maintained at acceptable levels.

We have now discovered that hydrophobically modified acrylic polymers that satisfy the above described conditions can be prepared by polymerizing C₁-C₄ (i.e. containing from 1 to 4 carbon atoms) alkyl (meth)acrylates and monoethylenically unsaturated carboxylic acids, such as methacrylic acid, with a low amount of associative monomers containing a multi-branched C₂₄-C₃₀ hydrophobic chain, especially in the presence of a chain transfer agent. These associative polymers possess remarkable thickening performances and show an optimal rheological behaviour in the presence of high load of inorganic pigments or fillers, in comparison with the hydrophobically modified crosslinked acrylic copolymers of the prior art. The polymers of the present invention are versatile and can beneficially thicken paper coating compositions comprising different binders to provide coating slips with proper water retention, and water-based paints.

### Summary

In accordance with the present disclosure, associative polymeric acrylic thickeners are produced providing high viscosity to dispersed, highly loaded pigmented aqueous compositions that are useful for coating paper or as water based paints. These associative thickeners possess non-Newtonian, pseudoplastic rheologic behaviour which renders them particularly suitable for use in such compositions.

The associative polyacrylic thickeners are obtained by free radical polymerization of a monomer mixture consisting of:
a) from 35 to 55 wt% (percent by weight) of monoethylenically unsaturated monomers containing a C₃- C₈ carboxylic group;
b) from 40 to 64.5 wt% of C₁-C₄ (meth)acrylic esters;
c) from 0.5 to 5.0 wt% of nonionic associative monomers of formula (I)

   R"O(CH₂CH₂O)ₙ-R' (I)

   wherein R" contains an ethylenically unsaturated group,
   n is from 15 to 50, preferably from 18 to 30, and
   R' is a multi-branched alkyl group of formula (II)

      R₁-CH(R₂)-CH₂- (II)

      wherein:
      R₂ is a linear or branched alkyl group containing from 12 to 15 carbon atoms,
      R₁ is a linear or branched alkyl group containing from 10 to 13 carbon atoms, and at least one of R₁ and R₂ is branched, preferably methyl-branched;
d) from 0 to 10 wt%, preferably from from 0 to 5 wt%, of other ionic or nonionic monoethylenically unsaturated monomers different from the monomers a)-c),
the polymerization being preferably conducted in the presence of from 0.02 to 0.50 wt% based on the weight of the monomers, more preferably from 0.03 to 0.10 wt%, of a chain transfer agent.

It is another object of the present disclosure an aqueous suspension useful as paper coating composition containing from 50 to 80 wt% of inorganic pigment; from 0.5 to 10 parts by weight of binder, based on 100 parts by weight of the dry pigment; from 0.01 to 2.0, preferably 0.01 to 1.0, parts by weight of the above described associative polyacrylic thickeners based on 100 parts by weight of the dry pigment; water and optionally other conventional additives.

The use of the aforesaid aqueous suspension in the coating of paper is a further object of the present invention.

In another embodiment, this disclosure relates to water based paints containing from 0.1 to 5.0 wt%, preferaby from 0.3 to 3.0 wt%, of the above described associative polyacrylic thickeners, from 5 to 85% wt%, preferably from 15 to 80 wt%, of at least one organic or inorganic pigment and/or filler; from 1 to 70 wt%, preferably from 3 to 60 wt%, of binder, from 10 to 90% wt%, preferably from 15 to 80 wt%, of water.

### Detailed Disclosure

### The associative polyacrylic thickeners

Acrylic acid, methacrylic acid, itaconic acid and mixtures thereof are examples of monoethylenically unsaturated monomer containing a carboxylic group that are useful for the preparation of the associative polyacrylic thickeners of the present disclosure. Methacrylic acid is the preferred monoethylenically unsaturated monomer containing a carboxylic group and is preferably used in an amount comprised between 40 and 50 wt%, more preferably from 43 to 48 wt% on the total weght of the monomers, even more preferebly from 45 to 48 wt%.

Useful C₁-C₄ (meth)acrylic acid esters are (meth)acrylic acid alkyl esters, such as methyl, ethyl, n-propyl, n-butyl (meth)acrylic acid esters, and mixtures thereof.

Preferably the (meth)acrylic acid ester is ethyl acrylate.

The C₁-C₄ (meth)acrylic acid esters b) are preferably used in an amount comprised between 45 and 55 wt%, on the total weght of the monomers.

The acrylic associative monomers c) are preferably used in an amount comprised between 0.5 and 3 wt%, more preferably from 0.5 to 2.5 wt%, on the total weght of the monomers. Advantageously, the acrylic associative monomers c) have formula (I'), corresponding to monomers of formula (I) in which R" is H₂C=C(R)-CO-:

H2C=C(R)-CO-O(CH₂CH₂O)ₙ-R' (I')

wherein R is H or CH₃, the latter being more preferred.

The nonionic associative monomers of formula (I) and (I') derive from the ethoxylation and subsequent esterification or etherification of multi-branched alcohols of formula (II')

R₁-CH(R₂)-CH₂OH (II')

where at least one of R₁ and R₂ is branched, preferably mono-methyl branched.

The alcohols of formula (II') may be obtained from the Guerbet dimerization of mixtures of C₁₂ to C₁₅ alcohols that are produced by the Fischer-Tropsch synthesis, in particular by the Sasol's Synthol^{®} process.

Suitable and preferred commercial sources of the alcohols of formula (II') are for example the multi-branched Sasol's Isofol^{®} 2426 S alcohols, derived from the Guerbet dimerization of the Sasol's methyl-branched C₁₂-C₁₃ alcohols (SAFOL^{®} 23).

Other utilizable alcohols for the Guerbet dimerization are the Sasol's SAFOL^{®} C₁₄-C₁₅ alcohols and any other mixtures of methyl-branched C₁₂-C₁₅ alcohols. The Sasol's methyl-branched C₁₂-C₁₃ alcohols (SAFOL^{®} 23) are preferred.

Accordingly, in the preferred embodiments, R₂ is a linear or branched alkyl group containing 12 or 13 carbon atoms; R₁ is a linear or branched alkyl group containing 10 or 11 carbon atoms and at least one of R₁ and R₂ is methyl-branched.

With the expression multi-branched alcohol we refer to alcohols with at least two branching point in their carbon atoms chain.

In an especially preferred embodiment, at least 50 wt%, more preferably at least 70 wt%, of nonionic associative monomers c) have formula (I) where R' is a multi-branched alkyl group that contains 25 or more carbon atoms; most preferably at least 50 wt%, or even at least 70 wt%, of nonionic associative monomers c) have formula (I) where R' is a multi-branched alkyl group that contains 25 or 26 carbon atoms.

The associative monomer c) is prepared by two reaction steps: the ethoxylation of the multi-branched alcohols of formula (II') and the esterification or etherification of the resulting ethoxylated alcohols with ethylenically unsaturated compounds, such as (meth)acrylic acid or the correspondent anhydride or ester, allyl or vinyl alcohol, and the like. Preferably the ethoxylated alcohols of formula (II') is esterified with methacrylic anhydride to give an associative monomer of formula (I'), for example as described in the French patent FR 2739850A1.

The ionic or nonionic monoethylenically unsaturated monomers d) may be any nonionic, anionic, cationic monomer different from the monomers a)-c), and mixtures thereof. Non limiting examples of utilizable unsaturated monomers d) are C₅-C₁₈ (meth)acrylic acid esters, vinyl acetate, styrene, vinyl chloride, vinylidene chloride, acrylonitrile, (meth)acrylamide, N,N-dimethyl(meth)acrylamide, t-butyl-(meth)acrylamide, sodium vinyl sulfonate, 2-acrylamido-2-methylpropane sulfonic acid and monoethylenically unsaturated nonionic associative monomers different from the monomers of formula (I). Most preferably the amount of monomers d) does not exceed 5 wt%, or even 3%, of the total weight of the monomer mixture.

An especially useful monomer d) is acrylamido-2-methylpropane sulfonic acid, or a salt thereof, that advantageously may be present in an amount from 0.1 to 5.0 wt%, more preferably from 0.5 to 3.0 % wt of the total weight of the monomer mixture. The use of acrylamido-2-methylpropane sulfonic acid improves the stability of the associative polyacrylic thickener when in emulsion form, that is, in the typical form in which it is obtained from free radical polymerization.

Other typical monomers d) may be monoethylenically unsaturated nonionic associative monomers different from the monomers of formula (I); such monomers d) preferably should not exceed 1.0 wt%, more preferably they should not exceed 0.5 wt% of the total weight of the monomer mixture.

Accordingly, in one embodiment the associative polyacrylic thickeners are obtained by free radical polymerization of a monomer mixture consisting of:
a) from 35 to 55 wt% of monoethylenically unsaturated monomers containing a C₃- C₈ carboxylic group;
b) from 40 to 64.5 wt% of C₁-C₄ (meth)acrylic esters;
c) from 0.5 to 5.0 wt% of a nonionic associative monomers of formula (I)

   R"O(CH₂CH₂O)ₙ-R' (I)

   wherein R" contains an ethylenically unsaturated group
   n is from 15 to 50, preferably from 18 to 30, and
   R' is a multi-branched alkyl group of formula (II)

      R₁-CH(R₂)-CH₂- (II)

      wherein:
      R₂ is a linear or branched alkyl group containing from 12 to 15 carbon atoms,
      R₁ is a linear or branched alkyl group containing from 10 to 13 carbon atoms,
      and at least one of R₁ and R₂ is branched, preferably methyl-branched;
d) from 0 to 10 wt%, preferably from from 0 to 5 wt%, of other ionic or nonionic monoethylenically unsaturated monomers different from the monomers a)-c),
wherein the monomers d) comprise:
d') from 0.1 to 5.0 wt% on the total weight of the monomers, preferably from 0.5 to 3.0 %wt, of acrylamido-2-methylpropane sulfonic acid, or a salt thereof, and
d") from 0 to 1.0 wt% on the total weight of the monomers, preferably from 0.1 to 0.5 wt%, of nonionic associative monomers different from the monomers of formula (I),
the polymerization being preferably conducted in the presence of from 0.02 to 0.50 wt% based on the weight of the monomers, more preferably from 0.03 to 0.10 wt%, of a chain transfer agent.

According to another embodiment, the associative polyacrylic thickeners are obtained by free radical polymerization of a monomer mixture consisting of:
a) from 35 to 55 wt% of monoethylenically unsaturated monomers containing a C₃- C₈ carboxylic group;
b) from 40 to 64.5 wt% one or more C₁-C₄ (meth)acrylic esters;
c) from 0.5 to 5.0 wt% of a nonionic associative monomers of formula (I)

   R"O(CH₂CH₂O)ₙ-R' (I)

   wherein R" contains an ethylenically unsaturated group
   n is from 15 to 50, preferably from 18 to 30, and
   R' is a multi-branched alkyl groups of formula (II)

      R₁-CH(R₂)-CH₂- (II)

      wherein:
      R₂ is a linear or branched alkyl group containing from 12 to 15 carbon atoms,
      R₁ is a linear or branched alkyl group containing from 10 to 13 carbon atoms,
      and at least one of R₁ and R₂ is branched, preferably methyl-branched;
d) from 0 to 10 wt%, preferably from from 0 to 5 wt%, of other ionic or nonionic monoethylenically unsaturated monomers different from the monomers a)-c), wherein the monomers d) comprise:
   d") from 0 to 1 wt% on the total weight of the monomers, preferably from 0.1 to 0.5 wt%, of nonionic associative monomers different from the monomers of formula (I),
   the polymerization preferably being conducted in the presence of from 0.02 to 0.50 wt% based on the weight of the monomers, more preferably from 0.03 to 0.10 wt%, of a chain transfer agent.

In advantageus embodiments, the monomers d), if any is present, consist of from 0.1 to 5.0 wt%, preferably from 0.5 to 3.0 wt% on the total weight of the monomers of acrylamido-2-methylpropane sulfonic acid, or a salt thereof, and/or from 0 to 1.0 wt%, preferably from 0.1 to 0.5 wt% on the total weight of the monomers of nonionic associative monomers different from the monomers of formula (I).

The chain transfer agent which is used to regulate the molecular weight of the acrylic associative thickener may be chosen among those known in art.

Suitable chain transfer agents for use in this invention, without being limited to them, may be selected from a variety of thiocompounds and disulfides, such as C₁ to C₁₈ alkyl mercaptans, mercaptocarboxylic acids, mercaptocarboxylic esters, thioesters, C₁ to C₁₈ alkyl disulfides, aryldisulfides, polyfunctional thiols, and the like; phosphites and hypophosphites; haloalkyl compounds, such as carbon tetrachloride, bromotrichloromethane, and the like; and unsaturated chain transfer agents, such as alpha-methylstyrene.

Specific examples of suitable chain transfer agents include, but not limited to, octyl mercaptan, n-dodecyl mercaptan, t-dodecyl mercaptan, hexadecyl mercaptan, octadecyl mercaptan (ODM), isooctyl 3-mercaptopropionate (IMP), butyl 3-mercaptopropionate, 3-mercaptopropionic acid, butyl thioglycolate, isooctyl thioglycolate, dodecyl thioglycolate, and the like, n-dodecylmercaptan being preferred.

It has been found that by using the preferred minimum quantities of chain transfer agent, less than 0.10% by weight by weight of the monomers, it is possible to lower the amount of associated monomers c) while maintaining or even improving the performance of the thickener, at least in paper coating copmpositions.

The amount of each chain transfer could need to be optimized, depending on its activity, but basically, the teaching is that low amounts of chain transfer agent are needed. The acrylic associative thickeners of the present disclosure may be prepared in a conventional manner, typically and preferably by emulsion polymerization. The emulsion polymerization techniques are well known in the art such as, for example, as disclosed in U.S. Patents US 4,325,856, US 4,654,397 and US 4,814,373 . For the preparation of the associative polyacrylic thickeners of this disclosure conventional surfactants may be used in polymerization, such as, for example, alkali metal or ammonium alkyl sulfates and alkyl ethoxysulfates, alkyl sulfonic acids and oxyethylated alkyl phenols. The amount of surfactant used is usually 0.1% to 6% by weight, based on the total weight of the monomers. Thermal or redox initiation processes may be used. Conventional free radical initiators may be used such as, for example, hydrogen peroxide, t-butyl hydroperoxide, t-amyl hydroperoxide, alkali or ammonium persulfates. Redox systems using the same initiators coupled with a suitable reductant such as, for example, sodium sulfoxylate formaldehyde, sodium hydrosulfite, isoascorbic acid, hydroxylamine sulfate and sodium bisulfite may also be used, optionally in combination with metal ions such as, for example iron and copper, optionally further including complexing agents for the metal. The monomer mixture may be added neat or as an emulsion in water. The emulsion polymerization process may utilize a preformed seed emulsion polymer such as, for example, by adding 5% (based on total monomers) of the monomer mixture to the kettle and making it react previously. Typically the polymerization process is carried out at a reaction temperature in the range of about 20°C to about 95°C, however, higher or lower temperatures can be used. Techniques to reduce residual monomer such as, for example, subjecting the reaction mixture to steam stripping, hold times, and additional radical sources may be employed.

The associative polyacrylic thickeners of the present disclosure may be supplied in their acidic form, prefreably in emulsion, but also in solid form to formulate the aqueous paper coating composition and the water-based paint, together with their other ingredients: pigment, binder, and other additives.

### Paper coating compositions

The aqueous suspensions useful as paper coating compositions contain from 50 to 80% by weight of inorganic pigment; from 0.5 to 10 parts by weight of binder, based on 100 parts by weight of the dry pigment; from 0.01 to 2.0, preferably 0.01 to 1.0, parts by weight of the above described associative polyacrylic thickeners, based on 100 parts by weight of the dry pigment; water and optionally other conventional additives.

Suitable inorganic pigments for the preparation of the aqueous suspensions useful as paper coating compositions of the present disclosure are those commonly used in the coating of paper, such as kaolin, calcium carbonate, calcium aluminate sulfate, titanium dioxide, barium sulfate, calcium sulfate, magnesium carbonate, silicas, aluminas, aluminum hydrate, silicates, zinc oxide, argillaceous earth, talc and silicon dioxide, gypsum, and mixture thereof, with particles dimension normally below 2 µm for 40 to 99% of their weight.

The paper coating compositions also contain from about 0.5 to 10 parts by weight of at least one polymeric binder (dry weight) each 100 parts by weight of the dry pigment. Suitable polymeric binders utilizable in combination wih the associative polyacrylic thickeners of the disclosure to formulate the paper coating compositions are natural or synthetic or semi-synthetic binders normally used in the field; we mention, by way of example, film forming emulsion polymers of acrylic or methacrylic acid esters, copolymers of acrylic monomers with vinyl acetate, styrene, butadiene, acrylonitrile or mixtures thereof, and the polymers based on styrene, butadiene and acrylonitrile; native starch, partially hydrolized starch, oxidized starch, starch derivatives such as starch esters and starch ethers.

Conventiently, the choice of the binder of the paper coating compositions of the disclosure is not critical, because the associative polyacrylic thickener is very versatile and its thickening capacity is very little influenced by the chemical nature of the binder.

The paper coating compositions also usually contain from about 0.01 to 3 wt% of a dispersant; conventional dispersants are complex phosphates, salts of polyphosphoric acid and salts of low molecular weight polycarboxylic acids.

The aqueous paper coating compositions may also contain other additives typically used in the field, like surfactants; lubricants, such as micronized calcium stearate or waxes; water retention improvers; biocides, particularly when they are to be stored for a long time; fillers; optical brighteners; neutralizing agents (e.g. NaOH) for pH adjustment; antifoams; deaerating agents; leveling agents; dyes; other thickeners, such as carboxymethylcellulose.

Typically, the paper coating compositions comprise the water brought by the preparation form of its ingredients (aqueous polymeric emulsions or dispersions, aqueous pigment slurries) and water added, to a total amount of about 15 to 45 wt% of the composition. The pH of the paper coating compositions is preferably adjusted to values in the range from 6 to 10 and especially above 7, for example in the range from 8 to 10.0.

The aqueous coating compositions of the disclosure shall have Brookfield^{®} viscosity at 25° C and 100 rpm comprised between 200 and 3,500 mPa*s, preferably between 800 and 2,200 mPa*s.

The paper coating compositions of this disclosure may be prepared as it is conventional in this technique, by addition of the binder to the aqueous pigment suspension, followed by addition of the thickener and of the other additives and final regulation of the water amount.

The compositions may be then applied on the paper by means of any conventional machines (coaters), in stand-alone units (coating "outside machine") or integrated in a continuous apparatus (coating "in machine").

Any coating apparatus can fundamentally be used, such as blade coaters, film coaters, film press, size press, curtain coaters, spray coaters.

The associative polyacrylic thickeners of this disclosure are especially useful for the coating with blade coaters and film coaters.

Depending on the pigment system, the thickeners according to the invention can be used in paper coating compositions for the basecoat and/or for the topcoat.

The paper coating composition is preferably applied to uncoated or pre-coated base papers. The amount of coating slip applied is in general from 1 to 50 g, preferably from 5 to 30 g (dry matter), per square meter.

Paper coating compositions according to the disclosure have good performance characteristics, in particular good rheological properties and good water retention properties and printability.

An advantage of the polyacrylic associative thickeners of the invention is their general insensitiveness to the binder selection.

### The water based paints

The water based paints of the disclosure most preferably containsfrom 0.4 to 1.5 wt% of the associative polyacrylic thickeners, from 30 to 70 wt% of at least one organic or inorganic pigment and/or filler; from 5 to 50 wt% of binder, from 20 to 60% wt% of water. In accordance with the disclosure, there is no need to impose any restriction regarding the selection of suitable compounds to be used as pigments, fillers, binders or any other additives of the water-based paints.

Pigments and fillers suitable for the present invention include those known from the prior art.

Examples of suitable pigments are inorganic white pigments, inorganic chromatic pigments, organic pigments, carbon blacks and inorganic black pigments.

As inorganic white pigments, mention should be made in particular of oxides, such as titanium dioxide, zinc oxide (ZnO, zinc white), zirconium oxide, carbonates such as lead white, sulfates, such as lead sulfate; titanium dioxide is particularly preferred. As inorganic chromatic pigments, we mention those from the group of oxides and hydroxides in the form of their individual inorganic compounds or mixed phases, especially iron oxide pigments, chromium oxide pigments and oxidic mixed-phase pigments with rutile or spinel structure. Examples of iron oxide pigments are Colour Index Pigment Yellow 42 and Pigment Red 101. Examples of chromium oxide pigments are Colour Index Pigment Green 17 and Pigment Green 18. Examples of oxidic mixed-phase pigments are nickel-titanium yellow and chromium-titanium yellow, cobalt green and cobalt blue. Examples of inorganic black pigments include those as already described above together with the inorganic chromatic pigments, in particular black iron oxide and black oxidic mixed-phase pigments.

Examples of preferred organic pigments are those of the monoazo, disazo, azo-lake, beta-naphthol, azo metal complex series, and polycyclic pigments such as those from the phthalocyanine, quinacridone, and thioindigo series. Also suitable as organic pigments are lake-dyes such as Ca, Mg and Al lake-dyes containing sulfonic acid or carboxylic acid groups, and carbon blacks. Mention should be made in particular of carbon blacks obtained by the furnace black process, and chemically surface-modified carbon blacks, such as sulpho- or carboxyl-containing carbon blacks.

Fillers, also called extender pigments, comprise substances other than the pigments mentioned, these substances being primarily light in color and being inert towards the binder component. With particular preference, the fillers have a lower optical refractive index than the aforementioned white pigments. Examples of inorganic fillers that may be mentioned include carbonates, such as chalk, calcite or dolomite, silicon dioxide (ground quartz), natural or synthetic silicas, silicates, such as talc, kaolin or mica, and sulfates such as barium sulfate. Examples of organic fillers include polymeric powders and those known as hollow spheres.

The binder may be any standard type and may include different binder materials. Suitable binders include both organic and inorganic compounds. Preferred organic binders are water-soluble, water-dispersible or water-emulsifiable, natural, natural-modified or synthetic, film-forming compounds. Examples of natural binders include natural resins, such as rosin or schellac, natural oils, especially oils containing fatty acids, which are saturated or contain various degrees of unsaturation, said oils being oxidatively drying if desired, such as linseed oil, ricinene oil, soya oil, castor oil, and the like. Modified natural binders are, in particular, chemically modified natural resins, e.g. rosin-maleate resin, and modified oils, e.g. isomerized oils, styrenated and acrylated oils, and also cellulose derivatives such as cellulose nitrates, cellulose esters of organic acids. Examples of synthetic binders are saturated polyesters obtained by polyesterifying bifunctional or higher polyfunctional alcohols with polyfunctional saturated-aliphatic, cyclo-aliphatic or aromatic carboxylic acids and/or their anhydrides. Further synthetic organic binders are alkyd resins (polyesters modified with unsaturated fatty acids, fatty oils or higher synthetic carboxylic acids) and chemically modified alkyd resins, examples being styrenated, acrylated or urethanized. Further suitable organic binders include acrylic resins (polyacrylates) in the form of their homopolymers and copolymers, e.g. styrene acrylate, and polyacrylic polyols.

Water-dilutable acrylic resins are particularly preferred.

As additives, the water based paints of the disclosure may optionally comprise surface-active agents and defoamers. Surface-active agents used are preferably dispersants, wetting agents and emulsifiers as widely used in the commercially paint and coating materials. In particular, they may be nonionic, anionic, cationic or amphoteric, and monomeric or polymeric, in nature.

Certain suitable thixotropic agents may also be included within these paint formulations as well. These would include, without limitation, phyllosilicates, pyrogenic silicas, and organic compounds based, for example, on high molecular mass polyolefins, hydrogenated castor oil, polyamides or polyacrylates.

Suitable defoamers include those based on natural oils or mineral oils, chemically modified silicones and silica materials.

Besides the above-mentioned additives, the water-based paints may include other standard paint additives and adjuvants, such as water-softeners, pH regulators, further film-forming and levelling assistants, dryers (siccatives), anti-skinning agents, anti-fouling agents, UV protectants and stabilizers, biocides, and the like.

Solvents may also be present within the water-based paints. Preferred solvents include water-soluble or water-miscible solvents. The solvent may serve either as a cosolvent for the water-based components or as an auxiliary for improving the drying and film-forming (coalescing) properties of the paint and coating materials. Also suitable are mixtures of different solvents, and, where appropriate, polymeric, high-boiling solvents having a boiling point of more than 250 °C. Solvents that can be used in the water based paints of the disclosure are, for example, compounds from the group of the aliphatic, cycloaliphatic or aromatic hydrocarbons and terpene hydrocarbons, and alcohols, glycol ethers and polyglycol ethers, esters and ketones. Amine-type solvents are also suitable, especially those based on primary, secondary and tertiary, aliphatic and aromatic or cycloaliphatic amines, and also mixtures and derivatives thereof.

The amount of solvent introduced where appropriate in the composition of the invention is guided by the desired processing properties and by the use of the paint formulations and by environmental aspects of the application. The above-mentioned solvents may also function as diluents for the water based paints. Generally, the solvent content is preferably less than 55 % by weight, in particular less than 30 % by weight. More preferably, the water based paints do not contain any organic solvent or less than 2 wt% of organic solvent.

The water-based paints are typically manufactured by a two-step process.

First, a dispersion phase, commonly referred to as the grind phase, is prepared by mixing dry paint pigments with a portion of the liquid paint components, including also most other solid powder formulation materials, under constant high shear agitation to provide a high viscosity and high solids mixture. The second step of the paint manufacturing process is commonly referred to as the let-down or thin-down phase, because the viscous grind is diluted with the remaining formulation components, which are generally less viscous or less stable to high shear than the grind mix.

Depending on the final use, the water based paints of the disclosure can be formulated with appropriate additives and ingredients to become: a dispersion paint, wall paint, interior paint, washable paint, emulsion paint, high gloss paint, satin paint, exterior paint, facade paint, filler paint, silicate paint, thermal reflective paint, structural paint, concrete coating, waterproofing coating, decorative paint, spray paint, primer, etc.

### EXAMPLES

### Preparation of nonionic associative monomers of Formula I

Multi-Branched Acrylic Associative Monomers of formula I (MBAAM) were prepared by esterifying with methacrylic anhydride a commercial mixture of multi-branched Guerbet alcohols, previously ethoxylated with 25 moles of ethylene oxide per mole of alcohol (25 moles ethoxylated ISOFOL^{®} 2426S, Sasol).

200.0 g of the ethoxylated alcohols and 0.065 g of 2-methoxy hydroquinone were loaded in a 1000 ml polymerization reactor, equipped with stirrer, thermometer, heating and cooling devices, and heated to 65 °C. Subsequently, 37.8 g of methacrylic anhydride were feed into the reactor over a period of 15 minutes. At the end of the addition, the temperature of the reaction mass was brought to 90 °C. After 5 hours, the reaction mass was cooled to 65 °C and 74.4 g of methacrylic acid were added. Finally, at 45 °C the reaction mass was diluted with 106.6 g of deionized water.

A water solution containing about 50 wt% of nonionic associative monomers of Formula I and 25 wt% of methacrylic acid was obtained.

These associative monomers are characterized by methyl substitutions on the main branches of the hydrophobic chains.

More than 70 wt%, of MBAAM have formula (I) where R' is a multi-branched alkyl group that contains 25 or 26 carbon atoms.

### Preparation of a comparative nonionic associative monomer

A Comparative Acrylic Associative Monomer (CAAM) was prepared following the same procedure, but using e mono-branched 25 mole ethoxylated alcohol, 2 decyl-1-tetradecanol (25 moles ethoxylated ISOFOL^{®} 24, Sasol).

In the Examples the following monomers or raw materials were used:
▪ Methacrylic acid (MAA)
▪ Ethyl Acrylate (EA)
▪ Multi-Branched Acrylic Associative Monomers of formula I (MBAAM), prepared as described above
▪ Comparative Acrylic Associative Monomer (CAAM), prepared as described above
▪ 2-Acrylamido-2-methylpropane sulfonic acid, sodium salt (AMS), 50 wt% water solution;
▪ n-Dodecyl Mercaptane (DDM);
▪ Sodium Lauryl Sulfate 29 wt% water solution (SLS)
▪ Ammonium Persulfate;

### Example 1

336.3 g of water, 17.3 g of AMS aqueous solution and 7.2 g of SLS were loaded in a 1000 ml polymerization reactor, equipped with stirrer, thermometer, heating and cooling devices, and heated to 80 °C.

Aside, 305.7 g of water, 7.3 g of SLS, 148.3 g of ethyl acrylate, 126.9 g methacrylic acid, 24.5 g of the 50 wt% MBAAM water solution and 0.46 g of DDM were loaded into a stirred feed reactor and emulsified.

When the content of the polymerization reactor reached the temperature of about 80 °C, a solution of 0.29 g of ammonium persulfate in 2 g of water were poured into this first reactor.

Soon after, the monomers emulsion of the feed reactor was metered into the polymerization reactor over a period of 120 minutes.

The reaction mass was maintained under stirring for additional 90 min at a temperature of about 85 °C and then cooled to room temperature.

An associative polyacrylic thickener emulsion having an active matter content of about 30 wt% was obtained.

The associative acrylic thickeners of Examples 2-12 were prepared following the same procedure described above.

Tables 1 reports the monomers used for the preparation of the associative polyacrylic thickeners of Examples 1-12 and their amounts as per cent by weight based on the total weight of monomers.

**Table 1**

| Examples | MBAAM | CAAM | EA | MAA | AMS | 20 DDM |
|---|---|---|---|---|---|---|
| 1 | 4.0 | | 49.0 | 43.9 | 2.9 | 0.15 |
| 2* | | 4.0 | 49.0 | 43.9 | 2.9 | 0.15 |
| 3 | 4.1 | | 49.7 | 44.6 | 1.5 | 0.15 |
| 4* | | 4.1 | 49.7 | 44.6 | 1.5 | 0.15 |
| 5 | 4.0 | | 49.0 | 44.0 | 2.9 | 0.08 |
| 6* | | 4.0 | 49.0 | 44.0 | 2.9 | 0.08 |
| 7 | 4.2 | | 50.5 | 45.3 | - | 0.08 |
| 8* | | 4.2 | 50.5 | 45.3 | - | 0.08 |
| 9 | 2.0 | | 50.7 | 44.4 | 3.0 | 0.04 |
| 10* | | 2.0 | 50.7 | 44.4 | 3.0 | 0.04 |
| 11 | 2.1 | | 52.2 | 45.7 | - | 0.05 |
| 12* | | 2.1 | 52.2 | 45.7 | - | 0.05 |

| | | | | | | |
|---|---|---|---|---|---|---|
| * Comparative | | | | | | |

### Evaluation of the Associative Properties of the Thickeners.

In order to evaluate the associative properties of the thickeners of the invention, the viscosity and the viscoelastic behaviour of a 0.06 wt%, as active matter, of the polymers of Examples 3 or comparative Example 4 and 0.15 wt% of lauryl sulfate water solution (at pH 9.0) was determined. The determinations were performed using an Anton Paar MCR 302 rheometer equipped with a cone and plate CP 50 geometry. The solutions were characterised by using both rotational (Flow Curve) and oscillatory tests (Amplitude Sweep).

### following parameters were applied:

### Flow Curve:

Shear rate: from 0.01 to 10.000 s-1
Temperature: 20°C
91 data points
Acquisition time: 30 to 1 sec (ramp logarithmic)

### Amplitude Sweep:

Shear strain: from 0.01% to 100 %
Temperature: 20°C
25 data points
Frequency: 10 sec⁻¹

Lauryl sulfate was used as a "probe" of the associative capacity of the polymer in water solutions. So the higher the viscosity in the solution with lauryl sulfate, the higher the polymer capacity of associative interaction.

Example 3 and 4 have the same monomer composition with the exception of the nonionic associative monomer.

Figure 1 and 2 reports the results obtained.

Figure 1 shows the viscosity in mPa*s vs. shear rate. It should be noted that the two polymers behave very differently in the presence of lauryl sulfate; in fact the associative acrylic thickener of Example 3 (according to the invention) shows viscosity values that are much higher than the associative acrylic thickener of comparative Example 4 over the entire shear rate range shown.

Figure 2 shows both the storage modulus and the loss factor vs. shear strain. Here, the comparative thickener is able to create a more structured network than the thickener according to invention (higher storage modulus). However, this network is also less resistant to stress than the network of the thickener according to the invention, as evidenced by the collapse of G' at high values of shear strain.

The trend of the loss factor curves confirm this behavior.

The ability of the thickener of maintaining the viscosity of the solutions over the time was evaluated by measuring the viscosity values at the maximum of the curve (see Fig. 1) after 5 and 10 days.

Table 2 reports the results obtained in mPa*s.

**Table 2**

| Example | Viscosity time=0 | Viscosity after 5 days | Viscosity after 10 days |
|---|---|---|---|
| 3 | 3082 | 1431 | 1110 |
| 4* | 415 | 60 | 116 |

| | | | |
|---|---|---|---|
| * Comparative | | | |

The associative acrylic thickener of the invention is able to maintain the viscosity of the solution for much longer time than the prior art associative acrylic thickener.

### APPLICATION EXAMPLES

### Paper Coating

Three kinds of paper coating compositions (PCC1-3) based on different recipes were prepared in order to evaluate the performances of the acrylic associative thickener of Examples 1-12.

The following ingredients were used:
- Hydrocarb 90, calcium carbonate slurry (from Omya, CH)
- Hydrocarb HC 60 GU, calcium carbonate slurry (from Omya, CH)
- Styrene-Butadiene Latex, 50 wt% active substance (Latex)
- Native Potato Starch, 30 wt% water solution (Starch);
- Polyvinyl Alcohol 5-99, 20 wt% water solution (PVOH).

The recipes of the three paper coating compositions are reported in Table 2 as parts by weights of dry matter.

**Table 3**

| Ingredient | PCC1 | PCC2 | PCC3 |
|---|---|---|---|
| Hydrocarb 90 | 55 | | 100 |
| HC 60 GU | 45 | 100 | |
| Latex | 4.5 | 2.5 | 7 |
| Starch | 0.5 | 8 | 5 |
| PVOH | 1.1 | 1.25 | |
| Thickener | 0.120 | 0.112 | 0.07 |
| Solid content (wt%) | 70.0 | 64.0 | 69.0 |

The paper coating compositions were prepared by slowly pouring the latex and the starch into 250.0 g of calcium carbonate under stirring (Cowles at 200 rpm). After homogenization, the speed of the stirrer was increased to 500 rpm and PVOH was poured into the mixtures. Subsequently, the total solid content was adjusted to the desired value by adding deionized water.

Finally, the associative acrylic thickeners were added under stirring at 800 rpm. After 20 min of stirring, the Brookfield viscosity at 100 rpm, 30 °C, of the paper coating composition was determined.

The viscosity values (mPa*s) obtained with each associative polyacrylic thickeners of Examples 1-12 are shown in Table 4, , together with the differences found in homologous pairs of thickeners different only for the length and branching of the hydrophobic chain. For comparative purposes, paper coating compositions containing a commercial associative acrylic thickener for paper coating based on EA, MAA, and an alkyl linear C₂₂ associative monomer (LAAM) were also prepared.

The viscosity values demonstrate that the associative polyacrylic thickeners of the invention, even those containing as low as about 2 wt% of associative monomers, possess remarkable rheological properties in different paper coating compositions, most often sharply superior to the rheological properties of prior art associative thickeners and of a commercial thickener.

**Table 4**

| Thickener | PCC1 | PCC2 | PCC3 | Δ PCC1 | Δ PCC2 | Δ PCC3 |
|---|---|---|---|---|---|---|
| Example 1 | 1840 | 1450 | 1572 | -20 | +165 | +244 |
| Example 2* | 1860 | 1286 | 1328 | | | |
| Example 3 | 1876 | 1368 | 1565 | +12 | +66 | +125 |
| Example 4* | 1864 | 1302 | 1440 | | | |
| Example 5 | 1816 | 1691 | 1460 | +208 | +193 | +56 |
| Example 6* | 1608 | 1498 | 1404 | | | |
| Example 7 | 2016 | 1656 | 1680 | +27 | +102 | +176 |
| Example 8* | 1989 | 1554 | 1504 | | | |
| Example 9 | 1996 | 1568 | 1584 | +140 | +12 | +132 |
| Example 10* | 1856 | 1556 | 1452 | | | |
| Example 11 | 1998 | 1748 | 1754 | +102 | +126 | +130 |
| Example 12* | 1896 | 1622 | 1624 | | | |
| LAAM* | 1288 | 1366 | 1142 | +710** | +382** | +612** |

| | | | | | | |
|---|---|---|---|---|---|---|
| * Comparative - **Δ Viscosity Ex 11- LAAM | | | | | | |

### Paints

Four water based paints were prepared with the associative acrylic thickeners of Examples 7-10. Table 5 shows the amounts of each ingredient (parts by weight) used for the preparation of the paints.

The waterborne paint were prepared following a three-phase process.

In the first phase, the liquid ingredients were mixed under stirring (Cowles stirrer at 400 rpm for 5 minutes). In the subsequent phase B, all the solid materials and the thickener emulsion were added to the liquid mixture under constant high shear mixing (Cowles stirrer at 1300 rpm for 15 minutes) in order to achieve a high level of dispersion. In the last phase C, the binder, the solvents and the remaining ingredients were added always under stirring (Cowles stirrer at 1500 rpm for 10 minutes).

The Brookfield viscosity of the water based paints was determined soon after preparation (at 20 rpm, 27 °C) and after 24 hours (at 20 rpm, 20 °C).

Table 6 reports the results obtained in mPa*s.

**Table 5**

| | Ingredient | Parts |
|---|---|---|
| Phase A | Water | 27 |
| | (NaPO₃)₆ 20% | 1 |
| | Acticide FS (N) | 0.2 |
| | Reotan L | 0.2 |
| | Verapon B 110 | 0.7 |
| | Propylene glycol | 0.5 |
| | Defomex 2033 N | 0.1 |
| Phase B | Talc | 2.5 |
| | Tioxide RXL | 18 |
| | Omyacarb 2 AV | 10 |
| | Carbital C 130 | 12.5 |
| | NH₄OH 25% | 0.23 |
| | Thickener | 0.8 |
| Phase C | Acronal S 790 | 20 |
| | Defomex 2033 N | 0.1 |
| | Texanol | 0.5 |
| | Thickener | 0.35 |
| | Propylene Glycol | 0.5 |
| | NH₄OH 25% | 0.03 |
| | Water | to 100 |

**Table 6**

| Thickener | Viscosity | Viscosity 24 hours |
|---|---|---|
| Example 7 | 15000 | 15380 |
| Example 8* | 12520 | 12780 |
| Example 9 | 11200 | 10400 |
| Example 10* | 10440 | 9960 |

| | | |
|---|---|---|
| * Comparative | | |

Also in water based paint, the associative polyacrylic thickeners of the invention show better thickening properties than of prior art associative thickeners.

## Claims

1. Associative polyacrylic thickeners obtained by free radical polymerization of a monomer mixture consisting of:
a) from 35 to 55 wt% of monoethylenically unsaturated monomers containing a C₃- C₈ carboxylic group;
b) from 40 to 64.5 wt% of C₁-C₄ (meth)acrylic esters;
c) from 0.5 to 5.0 wt% of nonionic associative monomers of formula (I)
R"O(CH₂CH₂O)ₙ-R' (I)
wherein R" contains an ethylenically unsaturated group,
n is from 15 to 50, preferably from 18 to 30, and
R' is a multi-branched alkyl group of formula (II)
R₁-CH(R₂)-CH₂- (II)
wherein:
R₂ is a linear or branched alkyl group containing from 12 to 15 carbon atoms,
R₁ is linear or branched alkyl group containing from 10 to 13 carbon atoms,
and at least one of R₁ and R₂ is branched;
d) from 0 to 10 wt% of other ionic or nonionic monoethylenically unsaturated monomers different from the monomers a)-c).

2. Associative polyacrylic thickeners according to claim 1 obtained by the free radical polymerization of the monomers a)-c) and optionally d), the polymerization being conducted in the presence of from 0.02 to 0.50 wt%, based on the weight of the monomers, of a chain transfer agent.

3. Associative polyacrylic thickeners according to claim 1 or 2 wherein in the nonionic associative monomers of formula (I) R' is a multi-branched alkyl group of formula (II) where R₂ is a linear or branched alkyl group containing 12 or 13 carbon atoms; R₁ is a linear or branched alkyl group containing 10 or 11 carbon atoms and at least one of R₁ and R₂ is methyl-branched.

4. Associative polyacrylic thickeners according to claim 3 wherein at least 50 wt% of nonionic associative monomers c) have formula (I) where R' is a multi-branched alkyl group that contains 25 or more carbon atoms.

5. Associative polyacrylic thickeners according to claim 1 or 2 obtained by the free radical polymerization of a monomer mixture consisting of the monomers a)-d) wherein the monomers d) comprise:
d') from 0.1 to 5.0 wt% on the total weight of the monomers of acrylamido-2-methylpropane sulfonic acid, or a salt thereof, and
d") from 0 to 1.0 wt% on the total weight of the monomers of nonionic associative monomers different from the monomers of formula (I).

6. Associative polyacrylic thickeners according to claim 1 or 2 obtained by the free radica polymerization of a monomer mixture consisting of the monomers a)-d) wherein the monomers d) comprise:
d") from 0 to 1.0 wt% on the total weight of the monomers of nonionic associative monomers different from the monomers of formula (I).

7. Associative polyacrylic thickeners according to claim 1 or 2, obtained by the free radical polymerization of a monomer mixture consisting of the monomers a)-d), wherein the monomers d) consist of:
d') from 0.1 to 5.0 wt% on the total weight of the monomers of acrylamido-2-methylpropane sulfonic acid, or a salt thereof, and/or
d") from 0.1 to 0.5 wt% on the total weight of the monomers of nonionic associative monomers different from the monomers of formula (I).

8. Associative polyacrylic thickeners according to any of the preceding claims wherein methacrylic acid is the monoethylenically unsaturated monomer a) and is used in an amount comprised between 43 and 50 wt% on the total weght of the monomers.

9. Aqueous suspension for use as paper coating compositions containing from 50 to 80% by weight of inorganic pigment; from 1 to 10 parts by weight of binder per 100 parts by weight of the dry pigment; from 0.1 to 2.0 parts by weight of the associative polyacrylic thickeners of any of claims from 1 to 8 per 100 parts by weight of the dry pigment, and water.

10. Water-based paints containing from 0.1 to 5.0 wt% of the associative polyacrylic thickeners of any of claims from 1 to 8, from 5 to 85% by weight of at least one organic or inorganic pigment and/or filler; from 1 to 70% by weight of binder, from 10 to 90% by weight of water.

## Patentansprüche

1. Assoziative Polyacryl-Verdickungsmittel, erhalten durch radikalische Polymerisation einer Monomermischung, bestehend aus:
a) von 35 bis 55 Gew.-% von monoethylenisch ungesättigten Monomeren, die eine C₃-C₈ Carboxylgruppe umfassen;
b) von 40 bis 64,5 Gew.-% von C₁-C₄(Meth)acrylsäureestern;
c) von 0,5 bis 5,0 Gew.-% von nichtionische assoziativen Monomeren der Formel (I)
R"O(CH₂CH₂O)ₙ-R' (I)
wobei R" eine ethylenisch ungesättigte Gruppe umfasst,
n von 15 bis 50, vorzugsweise 18 bis 30, beträgt und
R' eine mehrfach verzweigte Alkylgruppe der Formel (II) ist
R₁-CH(R₂)-CH₂- (II)
wobei:
R₂ eine lineare oder verzweigte Alkylgruppe ist, die 12 bis 15 Kohlenstoffatome umfasst,
R₁ eine lineare oder verzweigte Alkylgruppe ist, die 10 bis 13 Kohlenstoffatome umfasst,
und mindestens eine von R₁ und R₂ verzweigt ist;
d) von 0 bis 10 Gew.-% von anderen ionischen oder nichtionischen monoethylenisch ungesättigten Monomeren, die sich von den Monomeren a)-c) unterscheiden.

2. Assoziative Polyacryl-Verdickungsmittel nach Anspruch 1, erhalten durch die radikalische Polymerisation der Monomere a)-c) und gegebenenfalls d), wobei die Polymerisation in der Gegenwart von 0,02 bis 0,50 Gew.-%, bezogen auf das Gewicht der Monomere, eines Kettenübertragungsmittels durchgeführt wird.

3. Assoziative Polyacryl-Verdickungsmittel nach Anspruch 1 oder 2, wobei in den nichtionischen assoziativen Monomeren der Formel (I) R' eine mehrfach verzweigte Alkylgruppe der Formel (II) ist, wobei R₂ eine lineare oder verzweigte Alkylgruppe ist, die 12 oder 13 Kohlenstoffatome umfasst; R₁ eine lineare oder verzweigte Alkylgruppe ist, die 10 oder 11 Kohlenstoffatome umfasst und mindestens eine von R₁ und R₂ methylverzweigt ist.

4. Assoziative Polyacryl-Verdickungsmittel nach Anspruch 3, wobei mindestens 50 Gew.-% der nichtionischen assoziativen Monomere c) die Formel (I) aufweisen, wobei R' eine mehrfach verzweigte Alkylgruppe ist, die 25 oder mehr Kohlenstoffatome umfasst.

5. Assoziative Polyacryl-Verdickungsmittel nach Anspruch 1 oder 2, erhalten durch die radikalische Polymerisation einer Monomermischung, bestehend aus den Monomeren a)-d), wobei die Monomere d) umfassen:
d') von 0,1 bis 5,0 Gew.-%, bezogen auf das Gesamtgewicht der Monomere, von Acrylamido-2-methylpropansulfonsäure, oder einem Salz davon, und
d") von 0 bis 1,0 Gew.-%, bezogen auf das Gesamtgewicht der Monomere, von nichtionische assoziativen Monomeren, die sich von den Monomeren der Formel (I)unterscheiden.

6. Assoziative Polyacryl-Verdickungsmittel nach Anspruch 1 oder 2, erhalten durch die radikalische Polymerisation einer Monomermischung, bestehend aus den Monomeren a)-d), wobei die Monomere d) umfassen:
d") von 0 bis 1,0 Gew.-%, bezogen auf das Gesamtgewicht der Monomere, vonnichtionische assoziativen Monomeren, die sich von den Monomeren der Formel (I) unterscheiden.

7. Assoziative Polyacryl-Verdickungsmittel nach Anspruch 1 oder 2, erhalten durch die radikalische Polymerisation einer Monomermischung, bestehend aus den Monomeren a)-d), wobei die Monomere d) bestehen aus:
d') von 0,1 bis 5,0 Gew.-%, bezogen auf das Gesamtgewicht der Monomere, von Acrylamido-2-methylpropansulfonsäure, oder einem Salz davon, und/oder
d") von 0,1 bis 0,5 Gew.-%, bezogen auf das Gesamtgewicht der Monomere, von nichtionischen assoziativen Monomeren, die sich von den Monomeren der Formel (I) unterscheiden.

8. Assoziative Polyacryl-Verdickungsmittel nach einem der vorhergehenden Ansprüche, wobei Methacrylsäure das monoethylenisch ungesättigte Monomer a) ist und in einer Menge zwischen 43 und 50 Gew.-%, bezogen auf Gesamtgewicht der Monomere, verwendet wird.

9. Wässrige Suspension zur Verwendung als Papierbeschichtungszusammensetzung, enthaltend 50 bis 80 Gew.-% von anorganischen Pigment; von 1 bis 10 Gewichtsteile von Bindemittel pro 100 Gewichtsteile des trockenen Pigments; von 0,1 bis 2,0 Gewichtsteile des assoziativen Polyacryl-Verdickungsmittels nach einem der Ansprüche 1 bis 8 pro 100 Gewichtsteile des trockenen Pigments, und Wasser.

10. Wasserbasierte Farben, die von 0,1 bis 5,0 Gew.-% der assoziativen Polyacrylat-Verdickungsmittel nach einem der Ansprüche 1 bis 8, von 5 bis 85 % nach Gewicht von wenigstens einem organischen oder anorganischen Pigment und/oder Füllstoff, von 1 bis 70 % nach Gewicht eines Bindemittels, und von 10 bis 90 % nach Gewicht von Wasser enthalten.

## Revendications

1. Epaississants polyacryliques associatifs obtenus par polymérisation radicalaire d'un mélange de monomères composé de :
a) de 35 à 55 % en poids de monomères mono-éthyléniquement insaturés contenant un groupe carboxylique C₃- C₈ ;
b) de 40 à 64,5 % en poids d'esters (méth)acryliques en C₁-C₄ ;
c) de 0,5 à 5,0 % en poids de monomères associatifs non ioniques de formule (I)
R"O(CH₂CH₂O)ₙ-R' (I)
dans lequel R" contient un groupe éthyléniquement insaturé,
n est compris entre 15 et 50, de préférence entre 18 et 30, et
R' est un groupe alkyle à ramifications multiples de formule (II)
R₁-CH(R₂)-CH₂- (II)
dans lequel :
R₂ est un groupe alkyle linéaire ou ramifié contenant de 12 à 15 atomes de carbone,
R₁ est un groupe alkyle linéaire ou ramifié contenant de 10 à 13 atomes de carbone,
et au moins l'un de R₁ et R₂ est ramifié ;
d) de 0 à 10 % en poids d'autres monomères ioniques ou non ioniques mono-éthyléniquement insaturés différents des monomères a)-c).

2. Epaississants polyacryliques associatifs selon la revendication 1, obtenus par polymérisation radicalaire des monomères a)-c) et éventuellement d), la polymérisation étant conduite en présence de 0,02 à 0,50 % en poids, par rapport au poids des monomères, d'un agent de transfert de chaîne.

3. Epaississants polyacryliques associatifs selon la revendication 1 ou 2, dans lesquels les monomères associatifs non ioniques de formule (I) R' est un groupe alkyle à ramifications multiples de formule (II) où R₂ est un groupe alkyle linéaire ou ramifié contenant 12 ou 13 atomes de carbone ; R₁ est un groupe alkyle linéaire ou ramifié contenant 10 ou 11 atomes de carbone et au moins l'un de R₁ et R₂ est méthyl-ramifié.

4. Epaississants polyacryliques associatifs selon la revendication 3, dans lesquels au moins 50 % en poids des monomères associatifs non ioniques c) ont la formule (I) où R' est un groupe alkyle à ramifications multiples contenant 25 atomes de carbone ou plus.

5. Epaississants polyacryliques associatifs selon la revendication 1 ou 2, obtenus par polymérisation radicalaire d'un mélange de monomères constitué des monomères a)-d) dans lequel les monomères d) comprennent :
d') de 0,1 à 5,0 % en poids par rapport au poids total des monomères d'acide acrylamido-2-méthylpropane sulfonique ou un de ses sels, et
d") de 0 à 1,0 % en poids du poids total des monomères de monomères associatifs non ioniques différents des monomères de formule (I).

6. Epaississants polyacryliques associatifs selon la revendication 1 ou 2, obtenus par polymérisation radicalaire d'un mélange de monomères constitué des monomères a)-d) dans lequel les monomères d) comprennent :
d") de 0 à 1,0 % en poids du poids total des monomères de monomères associatifs non ioniques différents des monomères de formule (I).

7. Epaississants polyacryliques associatifs selon la revendication 1 ou 2, obtenus par polymérisation radicalaire d'un mélange de monomères constitué des monomères a)-d), dans lesquels les monomères d) sont constitués :
d') de 0,1 à 5,0 % en poids par rapport au poids total des monomères d'acide acrylamido-2-méthylpropane sulfonique, ou un de ses sels, et/ou
d") de 0,1 à 0,5 % en poids du poids total des monomères de monomères associatifs non ioniques différents des monomères de formule (I).

8. Epaississants polyacryliques associatifs selon l'une quelconque des revendications précédentes, dans lesquels l'acide méthacrylique est le monomère mono-éthyléniquement insaturé a) et est utilisé dans une quantité comprise entre 43 et 50 % en poids par rapport au poids total des monomères.

9. Suspension aqueuse destinée à être utilisée dans des compositions de couchage de papier contenant de 50 à 80% en poids de pigment inorganique ; de 1 à 10 parties en poids de liant pour 100 parties en poids de pigment sec ; de 0,1 à 2,0 parties en poids d'épaississants polyacryliques associatifs de l'une quelconque des revendications 1 à 8 pour 100 parties en poids de pigment sec, et de l'eau.

10. Peintures à base d'eau contenant de 0,1 à 5,0 % en poids d'épaississants polyacryliques associatifs de l'une quelconque des revendications 1 à 8, de 5 à 85 % en poids d'au moins un pigment organique ou inorganique et/ou d'une charge ; de 1 à 70 % en poids de liant, de 10 à 90 % en poids d'eau.
